Europäisches Patentamt

**European Patent Office**

**Office européen des brevets**

(19)

(11) Publication number: **0 270 931 B1**

# EUROPEAN PATENT SPECIFICATION

(12)

(45) Date of publication of patent specification: **22.01.92**  (51) Int. Cl.⁵: **A01G 17/08**

(21) Application number: **87117452.0**

(22) Date of filing: **26.11.87**

(54) **Supporting device particularly for vine-shoots, tree branches and the like.**

(30) Priority: **03.12.86 IT 2255486**

(43) Date of publication of application:
**15.06.88 Bulletin 88/24**

(45) Publication of the grant of the patent:
**22.01.92 Bulletin 92/04**

(84) Designated Contracting States:
**DE FR**

(56) References cited:
**EP-A- 0 122 715**
**DE-A- 1 906 474**
**DE-A- 2 935 987**
**FR-A- 2 247 157**

(73) Proprietor: **Ravasio, Ferruccio**
**Fraz. Zerbo**
**I-27040 Ruino Pavia(IT)**

(72) Inventor: **Ravasio, Ferruccio**
**Fraz. Zerbo**
**I-27040 Ruino Pavia(IT)**

(74) Representative: **Modiano, Guido et al**
**MODIANO, JOSIF, PISANTY & STAUB**
**Modiano & Associati Via Meravigli, 16**
**I-20123 Milano(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a supporting device particularly for vine-shoots, tree branches and the like.

From previous studies by the same Applicant, a device is known for retaining vine-shoots which is substantially constituted by a body provided with an insertion seat for the coupling to a supporting wire; an elongated element extends from the body and is closeable on itself so as to form a loop region which embraces a vine-shoot or the like.

This type of device, which has proved itself to be valid from many points of view, in practice allowed to eliminate the conventional binding of shoots of vines or of other fruit-bearing trees with strips of willow, reed, wicker and the like, providing an element capable of being closed on itself with a simple operation so as to form the loop region for the retention of the shoot.

Also known from DE-A-1,906,474 is a device as defined in the precharacterizing part of claim 1. This known device includes a flexible elongated element having at one end thereof a body defining a first seat for hooking onto a horizontal supporting wire, and a second seat extending parallel to the first seat which is adapted for engagement with a portion of the flexible element wrapped around a substantially vertical vine shoot. However, this known device is not suitable for supporting horizontal or oblique vine shoots to horizontal wires, since the elongated element would be twisted in such a manner around such a vine shoot that it could easily be inadvertently disengaged from the second seat.

With the above-mentioned known devices, at the end of the season, when the shoot is to be pulled off the supporting wire, it was not infrequent that the loop region did not open, but on the contrary that the device uncoupled itself from the wire, with the consequent disadvantage of a significant loss of time to reapply the device to the wire or even to replace the device.

Another disadvantage which can be ascribed to the above mentioned device resides in the fact that difficulties were encountered in performing the closure on itself of the elongated element, due to an unavoidable tendency of the device itself to rotate with respect to the supporting wire.

The aim proposed by the present invention is to eliminate the above described disadvantages, by providing a supporting device specifically studied for vine-shoots, tree branches and the like, which allows the possibility of performing the support and retention of vine-shoots in an extremely rapid and easy manner, at the same time allowing the "pulling" of the shoot without thereby causing the uncoupling of the device from the supporting wire.

Within the scope of the above described aim, a particular object of the invention is to provide a supporting device which has the possibility of being self-tightening with respect to the wire, such that it increases its locking force with respect to the supporting wire in the course of time.

Still another object of the present invention is to provide a device which is applied to the wire with extreme rapidity and ease, and furthermore that it does not rotate about the supporting wire when the loop region for supporting the shoot is formed.

Not least object of the present invention is to provide a supporting device which can be easily obtained starting from materials commonly available on the market and which is furthermore advantageous from a merely economical point of view.

The above described aim, as well as the objects mentioned and others which will become apparent hereinafter, are achieved by a supporting device, as defined in the appended claims.

Further characteristics and advantages of the invention will become apparent from the description of a preferred, but not exclusive, embodiment of a supporting device particularly for vine-shoots, tree branches and the like, illustrated only by way of non-limitative example in the accompanying drawings, wherein:

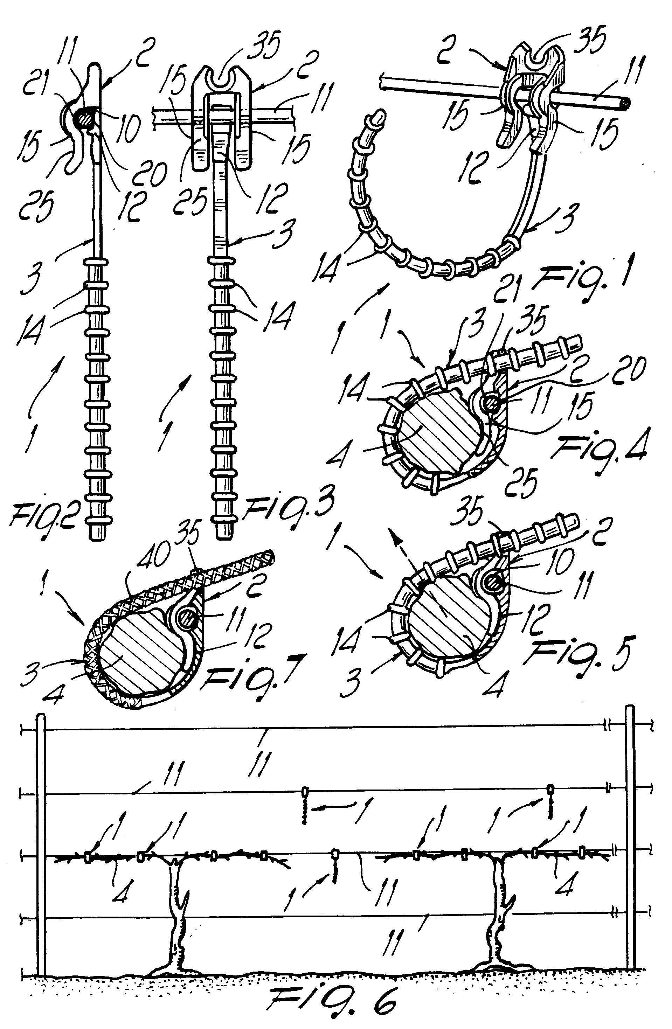

Figure 1 is a schematic perspective view of the supporting device applied to a supporting wire;

Figure 2 is a front view of the device from the side of arrangement of the loop region;

Figure 3 is a lateral view of the device, with the supporting wire in cross section;

Figure 4 is a schematic cross section view of the device once the loop region for the retention of the shoot is provided;

Figure 5 is a cross section view of the device pointing out the locking action effected by the tabs on the supporting wire as the shoot thickens;

Figure 6 is a schematic view of a row of vines schematically indicating the positioning of the supporting devices for the retention of the shoots; and

Figure 7 is a view of a different surface form of the elongated element.

With reference to the above described figures, the supporting device particularly for vine-shoots, tree branches and the like, generally indicated by the reference numeral 1, has a body 2 whereto is monolithically connected an elongated element 3, preferably with a wire-like configuration, which forms, as will become apparent hereinafter, the loop region for the retention of a vine-shoot or of a tree branch, generally indicted by 4 in the drawing.

More in detail, the body 2 defines a seat 10 for coupling to the supporting wire 11, which is obtained, on one side, from the coupling region 12 of the elongated element 3 and, on the other side, from a pair of shaped tabs 15 which are arranged substantially laterally to the elongated element 3.

More precisely, the coupling region 12 defines a recess 20 in the shape of a portion of circumference which forms the region of accommodation of the wire 11 and which cooperates with a corresponding recess 21 defined by the tabs 15, so as to define a substantially circular seat for the coupling of the device 1 to the wire 11.

The tabs 15 are arranged facing towards the side where the loop region forms by means of the elongated element 3 and, on said side, are provided with a concave surface 25 which rests by contact on the outer surface of the shoot 4 which is accommodated inside the loop region.

The elongated element 3 may be provided with annular thickenings 14 uniformly distributed along its longitudinal extension which act as retention elements for the formation of the loop element, engaging in a fork-like portion 35 which is defined by the body 2 in its upper portion or, more precisely, in the portion which is opposite with respect to the portion of insertion of the supporting wire 11.

By virtue of this type of arrangement, as is clearly illustrated in figures 4 to 5, during the closure of the loop region for the retention of the shoot 4 the device cannot rotate, since the concave surface 25 acts abuttingly on the surface of the shoot, so that the required contrast is achieved which allows to insert the free portion of the elongated element 2 in the fork-like element 35, obtaining a loop region of the required size.

As the diameter of the shoot increases, due to normal plant growth, the thickening of the shoot causes, by acting on the tabs 15, a locking of the device with respect to the wire, this being considerably important, since at the end of the season, when the shoot is pulled, by exerting a pulling action directly on the shoot, the opening of the loop region, that is to say the exit of the elongated element 3 from the fork 35, is achieved with no danger of the device uncoupling from the wire, since it is tightly locked onto the supporting wire.

Consequently, the device remains hanging from the supporting wire of the supporting row, and can be easily reused the following year, with no need for replacement.

Furthermore, the particular configuration adopted for the body 2 prevents a direct contact between the shoot and the wire, which may cause damage to said shoot.

Moreover, to what has been described one must add that the elongated element 3, instead of annular thickenings, can have knurlings 40 or similar arrangements capable of exerting a sufficient friction with the fork 35 to ensure a stable engagement, though allowing a limited extraction from the fork 35 so as to increase the loop region, following the thickening of the shoots as years go by.

From what has been described it is thus apparent that the invention achieves the intended aims and in particular the fact is stressed that the provision of a body which defines a seat of insertion for the supporting wire delimited between the tabs 15 and the coupling region 12 of the elongated body 2 allows to achieve a rapid and easy application of the device to the wire, together with an assurance of no uncoupling of the device from the supporting wire, even in the case in which a pulling action is exerted on the shoot, said pulling action, as mentioned, causing the opening of the loop region, without the uncoupling of the device from the wire.

Another important aspect furthermore resides in the fact that the device can be provided monolithically with a single molding of plastic material, contributing thereby to a significant reduction of production costs.

The invention thus conceived is susceptible to numerous modifications and variations, all of which are within the scope of the claims; moreover, all the details may be replaced with other technically equivalent elements.

In practice, the materials employed, as well as the contingent shapes and dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Supporting device, particularly for vine-shoots, tree branches and the like, comprising a body (2) having a seat (10) connectable to a supporting wire (11) and at least one engagement portion (35), said body (2) being connected at a coupling region (12) to an elongated element (3), which can be closed on itself and coupled with said engagement portion (35) so as to form a loop region for embracing a vine shoot, said seat (10) having one side delimited by said coupling region (12) and another side delimited by at least one tab (15) facing the coupling region (12) of the elongated element (3) and being adapted for engaging said wire (11), characterized in that said seat (10) is arranged substantially perpendicular to said engagement portion (35), whereby the coupling region (12) together with said elongated element (3) can embrace a supporting wire (11), said tab (15) and a vine shoot (4), such that growth increasing the diameter and weight of the vine shoot (4) causes increased locking of the supporting wire (11) in said seat (10) defined between said tab (15) and said coupling region (12).

2. Supporting device according to claim 1, characterized in that said at least one tab (15) comprises a pair of tabs (15) arranged laterally with respect to said coupling region (12) of said elongated element (3).

3. Supporting device according to claim 1, characterized in that said engagement portion (35) comprises a fork-like portion (35) defined on the opposite side of said body (2) with respect to said coupling region (12), said fork-like portion (35) being adapted for engagement with said elongated element (3) for the provision of said loop region.

4. Supporting device according to claim 2, characterized in that said coupling region (12) and said tabs (15) define therebetween recesses (20, 21) for accommodating said supporting wire (11).

5. Supporting device according to claims 1 and 2 or 4, characterized in that said tabs (15), on the side facing towards the loop region, define a concave surface (25) engageable by contact with the surface of a vine shoot (4).

6. Supporting device according to claim 1 or 2 and 3, characterized in that said elongated element (3) is provided with annular thickenings (14) uniformly distributed along its longitudinal extension and adapted to act as stop element for the locking of said elongated element (3) in said fork-like portion (35).

7. Supporting device according to claim 1, 2, 3 or 6, characterized in that it comprises, on said elongated element (3) , knurlings (40) adapted to exert a retention friction at said concave surface (25).

8. Supporting device, according to claim 1 and 2, 3, 6 or 7, characterized in that said elongated element (3) can be extracted from said engagement portion (35) by a pulling action exerted on a shoot (4) retained in said loop region.

9. Supporting device according to claims 1 and 3, 5 or 8, characterized in that said loop region defines an axis which is substantially parallel to the axis of said seat (10) defined between said tab (15) and said coupling region (12).

**Revendications**

1. Dispositif de support, en particulier pour sarments de vigne, branches d'arbre et analogue, comportant un corps (2) possédant un siège (10) pouvant être relié à un fil support (11) et au moins une pièce d'engagement (35), ledit corps (2) étant relié en une région de liaison (12) à un élément allongé (3), qui peut être fermé sur lui-même et relié à ladite pièce d'engagement (35) de manière à former une région en boucle pour entourer un sarment de vigne, ledit siège (10) possédant un côté délimité par ladite région de liaison (12) et un autre côté délimité par au moins une patte (15) tournée vers la région de liaison (12) de l'élément allongé (3) et étant apte à saisir ledit fil (11), caractérisé en ce que ledit siège (10) est disposé sensiblement perpendiculaire à ladite pièce d'engagement (35), de telle sorte que la région de liaison (12), conjointement avec ledit élément allongé (3), peut entourer un fil support (11), ladite patte (15) et un sarment de vigne (4), de telle sorte que la croissance augmentant le diamètre et le poids du sarment de vigne (4) provoque un verrouillage accru du fil support (11) dans ledit siège (10) défini entre ladite patte (15) et ladite région de liaison (12).

2. Dispositif de support selon la revendication 1, caractérisé en ce que ladite au moins une patte (15) est constituée d'une paire de pattes (15) disposées latéralement par rapport à ladite région de liaison (12) dudit élément allongé (3).

3. Dispositif de support selon la revendication 1, caractérisé en ce que ladite pièce d'engagement (35) comporte une partie (35) en forme de fourche définie sur le côté opposé dudit corps (2) par rapport à ladite région de liaison (12), ladite partie (35) en forme de fourche étant apte à un engagement avec ledit élément allongé (3), pour constituer ladite région en boucle.

4. Dispositif de support selon la revendication 2, caractérisé en ce que ladite région de liaison (12) et lesdites pattes (15) définissent entre elles des évidements (20,21) afin de recevoir ledit fil support (11).

**5.** Dispositif de support selon l'une quelconque des revendications 1 et 2 ou 4, caractérisé en ce que lesdites pattes (15), sur le côté tourné vers la région en boucle, définissent une surface concave (25) pouvant venir en contact de la surface d'un sarment de vigne (4).

**6.** Dispositif de support selon l'une quelconque des revendications 1 ou 2 et 3, caractérisé en ce que ledit élément allongé (3) est pourvu d'épaississements annulaires (14) uniformément répartis sur son étendue longitudinale et aptes à agir en tant qu'élément de butée pour le verrouillage dudit élément allongé (3) dans ladite partie (35) en forme de fourche.

**7.** Dispositif de support selon l'une quelconque des revendications 1,2,3 ou 6, caractérisé en ce qu'il comporte, sur ledit élément allongé (3), des moletages (40) aptes à exercer une friction de retenue sur ladite surface concave (25).

**8.** Dispositif de support selon l'une quelconque des revendications 1 et 2, 3,6 ou 7, caractérisé en ce que ledit élément allongé (3) peut être extrait de ladite pièce d'engagement (35) par une action de traction exercée sur un sarment (4) retenu dans ladite région en boucle.

**9.** Dispositif de support selon l'une quelconque des revendications 1 et 3, 5 ou 8, caractérisé en ce que ladite région en boucle définit un axe qui est sensiblement parallèle à l'axe dudit siège (10) défini entre ladite patte (15) et ladite région de liaison (12).

**Patentansprüche**

**1.** Unterstützungsvorrichtung, insbesondere für Rebenreiser, Baumäste und ähnliches, die einen Körper (2) aufweist, der einen mit einem Stützdraht (11) verbindbaren Sitz (10) und mindestens einen Eingreifteil (35) hat, wobei dieser Körper (2) an einem Verbindungsbereich (12) mit einem länglichen Element (3) verbunden ist, das in sich selbst geschlossen und mit dem Eingreifteil (35) verbunden werden kann, um einen Schlaufenbereich zum Umfassen eines Rebenreisers zu bilden, wobei der Sitz (10) eine durch den Verbindungsbereich (12) begrenzte Seite und eine andere durch mindestens eine Nase (15) begrenzte Seite hat, die den Verbindungsbereich (12) des länglichen Elementes (3) einfassen und dazu angepaßt sind, am Draht (11) anzugreifen, dadurch gekennzeichnet, daß der Sitz (10) im wesentlichen senkrecht zu dem Eingreifteil (35) angeordnet ist, wodurch der Verbindungsbereich (12) zusammen mit dem länglichen Element (3) einen Stützdraht (11), die Nase (15) und einen Rebenreiser (4) so umfassen kann, daß das den Durchmesser und das Gewicht des Rebenreisers (4) vergrößernde Wachstum ein verstärktes Blockieren des Stützdrahtes (11) in dem Sitz (10) bewirkt, der zwischen der Nase (15) und dem Verbindungsbereich (12) begrenzt wird.

**2.** Unterstützungsvorrichtung nach Anspruch 1, dadurch gekennzeichnet, daß diese mindestens eine Nase (15) ein Paar Nasen (15) aufweist, die seitlich in bezug auf den Verbindungsbereich (12) des länglichen Elementes (3) angeordnet sind.

**3.** Unterstützungsvorrichtung nach Anspruch 1, dadurch gekennzeichnet, daß das Eingreifteil (35) ein gabelartiges Teil (35) aufweist, das auf der dem Verbindungsbereich (12) entgegengesetzten Seite des Körpers (2) liegt, wobei das gabelartige Teil (35) in das längliche Element (3) eingreifen kann, um den Schlaufenbereich zu schaffen.

**4.** Unterstützungsvorrichtung nach Anspruch 2, dadurch gekennzeichnet, daß der Verbindungsbereich (12) und die Nasen (15) zwischen sich Vertiefungen (20, 21) zum Unterbringen des Stützdrahtes (11) begrenzen.

**5.** Unterstützungsvorrichtung nach Anspruch 1 oder 2 oder 4, dadurch gekennzeichnet, daß die Nasen (15) auf der zum Schlaufenbereich hin zeigenden Seite eine konkave Oberfläche (25) begrenzen, die bei Berührung an der Oberfläche eines Rebenreisers (4) angreifen kann.

**6.** Unterstützungsvorrichtung nach Anspruch 1 oder 2 und 3, dadurch gekennzeichnet, daß das längliche Teil (3) mit ringförmigen Verdickungen (14) versehen ist, die gleichmäßig entlang seiner Längsausdehnung verteilt sind und als Halteelement für das Blockieren des länglichen Elementes (3) in dem gabelartigen Teil (35) wirken können.

**7.** Unterstützungsvorrichtung nach Anspruch 1, 2, 3 oder 6, dadurch gekennzeichnet, daß sie auf dem länglichen Element (3) Kordierungen (40) aufweist, die eine Rückhaltereibung an der konkaven Oberfläche (25) ausüben können.

**8.** Unterstützungsvorrichtung nach Anspruch 1 und 2, 3, 6 oder 7, dadurch gekennzeichnet, daß das längliche Element (3) durch eine Zugbewegung, die auf den im Schlaufenbereich zurückgehaltenen Reiser (4) ausgeübt wird, aus dem Eingreifteil (35) herausgezogen werden kann.

9. Unterstützungsvorrichtung nach Anspruch 1 und 3, 5 oder 8, dadurch gekennzeichnet, daß der Schlaufenbereich eine Achse begrenzt, die im wesentlichen parallel zu der Achse des Sitzes (10) ist, die zwischen der Nase (15) und dem Verbindungsbereich (12) begrenzt ist.

Fig. 1

Fig. 2

Fig. 3

Fig. 4

Fig. 5

Fig. 6

Fig. 7